# EUROPEAN PATENT APPLICATION

(11) **EP 4 641 894 A1**
(43) Date of publication of application: **29.10.2025**
(21) Application number: 22969193.6
(22) Date of filing: 21.12.2022
(51) Int. Cl.: H02K 11/33, H05K 7/20

(54) **MOTOR DEVICE**

(71) Applicant: JTEKT Corporation, Kariya-shi, Aichi 448-8652 (JP)
(72) Inventor: SATO, Yuto, Kariya-shi, Aichi 448-8652 (JP)
(74) Representative: Winter, Brandl - Partnerschaft mbB
(86) International application number: PCT/JP2022/047161
(87) International publication number: WO 2024/134806

(57) **Abstract**

A motor device (10) includes a motor (20), a motor housing (12), a bearing holder (40), and a circuit board (50). The bearing holder supports a rotary shaft (26) of the motor. The bearing holder includes a first surface and a second surface that face opposite directions in an axial direction of the rotary shaft of the motor. The first surface faces a stator of the motor. The circuit board is disposed so as to face the second surface of the bearing holder. A plurality of electronic components is mounted on the circuit board. The motor housing includes a circuit board fixing portion (18) having a hole through which the circuit board is fixed.

## Description

### TECHNICAL FIELD

The present disclosure relates to motor devices.

### BACKGROUND ART

For example, Patent Document 1 below describes a motor device in which part of a motor is housed in a space defined by a motor housing and a heat sink. In this motor device, the heat sink is a bearing holder that supports a rotary shaft of the motor. The motor device includes a circuit board. Electronic devices that drive the motor are mounted on the circuit board. The circuit board is fixed to the heat sink.

### Related Art Documents

### Patent Documents

Patent Document 1: Japanese Unexamined Patent Application Publication No. 2021-61653 (JP 2021-61653 A)

### SUMMARY OF THE INVENTION

### Problem to be Solved by the Invention

When a circuit board is screwed to a heat sink, it is desirable that the position of the heat sink be accurately controlled to an appropriate position by the screwing. However, since the heat sink is housed in a motor housing, the position of the heat sink is indirectly controlled through control of the position of the motor housing. Therefore, the accuracy of positioning the heat sink when fixing the circuit board tends to decrease.

### Means for Solving the Problem

One aspect of the present disclosure provides a motor device. The motor device includes a motor, a motor housing, a bearing holder, and a circuit board. A stator of the motor is housed in a space defined by the motor housing and the bearing holder. The bearing holder supports a rotary shaft of the motor. The bearing holder includes a first surface and a second surface that face opposite directions in an axial direction of the rotary shaft. The first surface faces the stator. The circuit board is disposed so as to face the second surface. A plurality of electronic components is mounted on the circuit board. The motor housing includes a circuit board fixing portion having a hole through which the circuit board is fixed.

### BRIEF DESCRIPTION OF THE DRAWINGS

[FIG. 1] FIG. 1 is a sectional view showing a sectional configuration of a motor device according to an embodiment.
[FIG. 2] FIG. 2 is a perspective view showing a circuit board according to the embodiment.
[FIG. 3] FIG. 3 is a partial sectional view of the circuit board and a bearing holder according to the embodiment.
[FIG. 4] FIG. 4 is a sectional view showing a process of fixing the circuit board according to the embodiment.

### MODES FOR CARRYING OUT THE INVENTION

An embodiment will be described with reference to the drawings.

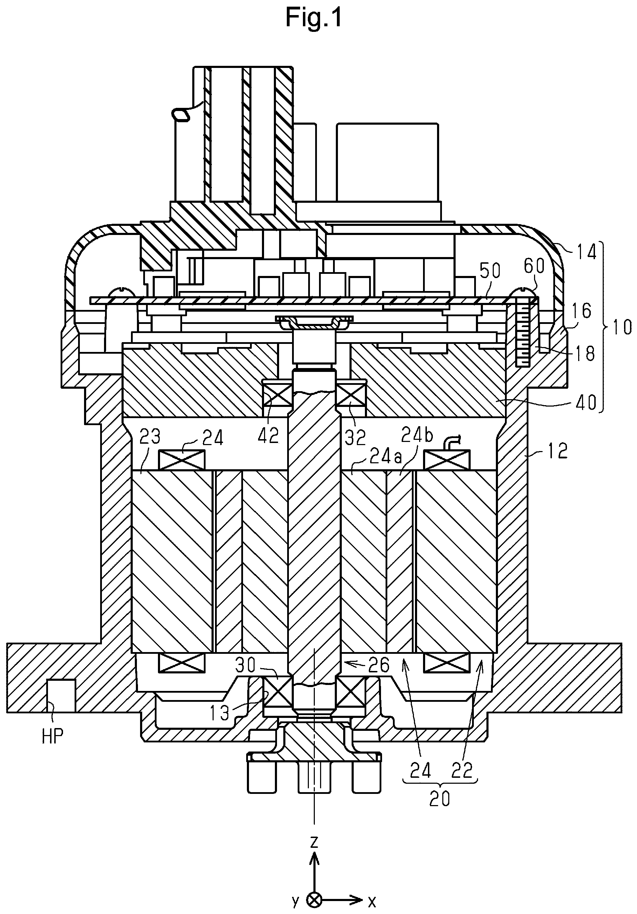

FIG. 1 shows a sectional configuration of a motor device 10.
The motor device 10 shown in FIG. 1 includes a motor housing 12 and a cover 14. A motor and a control device that are to be mounted in, for example, a steering system of a vehicle are housed in the form of a package inside the space defined by the motor housing 12 and the cover 14. The steering system may be, for example, a steer-by-wire system in which power transmission between a steering wheel and steered wheels is cut off. In that case, the motor included in the motor device 10 may be a motor that applies a reaction force to the steering wheel. The motor included in the motor device 10 may be a motor that steers the steered wheels.

A motor 20 is housed inside a space in the motor device 10 that is defined by the motor housing 12. The motor housing 12 is made of metal. For example, the motor housing 12 may be made of aluminum. The motor 20 includes a stator 22, a rotor 24, and a rotary shaft 26. The stator 22 of the present embodiment includes stator coils of two systems. The stator coils are insulated from each other. This is a redundant design aimed to allow the stator 22 to generate a magnetic field even if an abnormality occurs in one of the systems. The rotor 24 includes a rotor core 24a and a permanent magnet 24b provided on the surface of the rotor core 24a. That is, the motor 20 is a surface permanent magnet synchronous motor (hereinafter referred to as SPMSM). The rotary shaft 26 rotates with the rotor 24.

In FIG. 1, the axial direction of the rotary shaft 26 is the z-axis direction. Therefore, the radial direction of the rotor 24 is a direction perpendicular to the z-axis. In other words, the radial direction of the rotor 24 is expressed by the sum of a vector in the x-axis direction and a vector in the y-axis direction.

The motor housing 12 includes a peripheral wall (side wall 16) that forms the outer periphery, and an end wall that closes one end of the side wall 16. The motor housing 12 is open at the other end of the side wall 16. In other words, the motor housing 12 is open in the positive direction of the z-axis in FIG. 1. The opening of the motor housing 12 is closed by a bearing holder 40. The bearing holder 40 is substantially in the form of a flat plate. The bearing holder 40 is made of metal. For example, the bearing holder 40 is made of aluminum.

A first recess 13 is formed in the center of the end wall of the motor housing 12 so as to extend therethrough in the z-axis direction. A second recess 42 is formed in the center of the bearing holder 40 so as to extend therethrough in the z-axis direction. The first recess 13 and the second recess 42 have a circular shape when viewed from the z-axis direction.

A first bearing 30 is installed in the first recess 13 formed in the motor housing 12. The first bearing 30 is installed between the inner peripheral surface of the first recess 13 and the outer peripheral surface of the rotary shaft 26. The first bearing 30 rotatably supports a first end, namely an end in the negative z-axis direction, of the rotary shaft 26.

A second bearing 32 is installed in the second recess 42 formed in the bearing holder 40. The second bearing 32 is installed between the inner peripheral surface of the second recess 42 and the outer peripheral surface of the rotary shaft 26. The second bearing 32 rotatably supports a second end, namely an end in the positive z-axis direction, of the rotary shaft 26. The rotary shaft 26 is thus supported so as to be rotatable relative to the inner wall surface of the motor housing 12 via the first bearing 30 and the second bearing 32.

The bearing holder 40 includes a first surface and a second surface that face opposite directions in the z-axis direction. The first surface faces the stator 22 and the rotor 24 in the z-axis direction. The second surface is a control-side surface facing a circuit board 50. A drive circuit and a control circuit are mounted on the circuit board 50. The drive circuit is a circuit that drives the motor 20. The drive circuit includes an inverter etc. The control circuit is a circuit that controls the torque of the motor 20 by operating the drive circuit.

The circuit board 50 is fixed to the motor housing 12 by bolts 60. The motor housing 12 includes a plurality of supports 18 located inward of the side wall 16 in the radial direction of the motor housing 12. The circuit board 50 is fastened to the supports 18 by the bolts 60. The support 18 has a threaded hole for inserting the bolt 60.

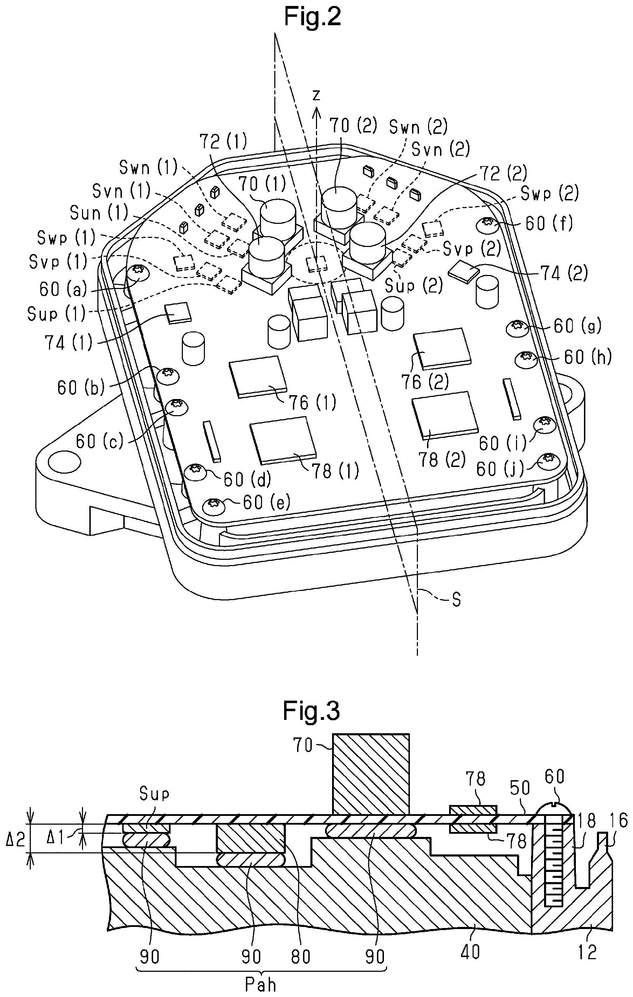

FIG. 2 is a diagram showing the circuit board 50 with the cover 14 removed, when viewed from the positive direction of the z-axis.
As shown in FIG. 2, the circuit board 50 is fastened to the motor housing 12 by 10 bolts 60(a) to 60(j). The letters in parentheses at the end of "bolt 60" are provided to identify the bolts 60.

The circuit board 50 includes a first surface facing the bearing holder 40 and a second surface facing the opposite direction in the z-axis direction from the first surface. Switching elements Sup, Sun, Svp, Svn, Swp, and Swn forming an inverter that drives the stator 22 are mounted on the first surface of the circuit board 50. In FIG. 2, the numerals in parentheses at the ends of the signs of the switching elements Sup, Sun, Svp, Svn, Swp, and Swn indicate whether each switching element corresponds to a first system or a second system. That is, the switching elements Sup(1), Sun(1), Svp(1), Svn(1), Swp(1), and Swn(1) form an inverter that drives a stator coil of the first system. The switching elements Sup(2), Sun(2), Svp(2), Svn(2), Swp(2), and Swn(2) form an inverter that drives a stator coil of the second system.

Similarly, in the following description, the numerals in parentheses at the ends of the signs indicate whether each member corresponds to the first system or the second system. When the members are described without the numerals in parentheses, it means that the description is a general description for the first system and the second system.

Filter capacitors 70, 72 are mounted on the second surface of the circuit board 50. A pre-driver 74 for driving the inverter is mounted on the second surface of the circuit board 50. A power supply circuit 76 and a microcomputer 78 are mounted on the circuit board 50. The microcomputer 78 is a processing circuit that performs a process of operating the inverter to control a current flowing through the stator 22. The power supply circuit 76 is a dedicated integrated circuit that controls power supply to the microcomputer 78. The power supply circuit 76 and the microcomputer 78 are mounted on both of the first surface and the second surface of the circuit board 50.

As shown in FIG. 2, the electronic components of the first system and the electronic components of the second system are disposed in different regions of the circuit board 50. That is, the electronic components of the first system and the electronic components of the second system are each disposed in two regions into which the circuit board 50 is divided by a plane S that passes through the z-axis and that is parallel to the z axis. The two regions have approximately the same area. The electronic components mounted in the two regions are arranged symmetrically. Regarding sensors that detect the rotation angle of the rotor 24, a sensor corresponding to the first system and a sensor corresponding to the second system are disposed on top of each other in the z-axis direction.

FIG. 3 is a partial sectional view of the circuit board 50 and the bearing holder 40. The section shown in FIG. 3 is not a section along a single plane. The section shown in FIG. 3 is a section connecting sections of a plurality of portions of the motor device 10 for convenience. As shown in FIG. 3, of the electronic components mounted on the circuit board 50, power electronic components that consume a large amount of power such as inverters are configured to efficiently dissipate heat via the bearing holder 40. FIG. 3 illustrates a configuration in which the switching element Sup, a shunt resistor 80, and the capacitor 70 dissipate heat to the bearing holder 40 via thermal grease 90. A shunt resistor is provided in each leg of the inverter. A detected value of voltage drop across a shunt resistor indicates a detected value of a current flowing through a corresponding leg.

The capacitor 70 does not protrude from the first surface of the circuit board 50 that faces the bearing holder 40. Therefore, heat generated by the capacitor 70 is dissipated to the bearing holder 40 via the circuit board 50 and the thermal grease 90.

The protrusion amount Δ1 of the switching element Sup from the circuit board 50 toward the bearing holder 40 is smaller than the protrusion amount Δ2 of the shunt resistor 80 from the circuit board 50 toward the bearing holder 40. Therefore, the distance between the bearing holder 40 and the circuit board 50 is smaller in the region where the switching element Sup is mounted than in the region where the shunt resistor 80 is mounted. The capacitor 70 does not protrude from the circuit board 50 toward the bearing holder 40. Therefore, the distance between the bearing holder 40 and the circuit board 50 is smaller in the region where the capacitor 70 is mounted than in the regions where the switching element Sup and the shunt resistor 80 are mounted.

This relationship holds not only for the shunt resistor 80, the switching element Sup, and the capacitor 70. This relationship generally holds in the regions of the bearing holder 40 that face the power electronic components. In other words, this relationship generally holds when a first electronic component and a second electronic component, namely two electronic components included in the power electronic components, have different protrusion amounts from the circuit board 50 toward the bearing holder 40. Specifically, the distance between the portion of the bearing holder 40 that faces the first electronic component and the circuit board 50 is greater than the distance between the portion of the bearing holder 40 that faces the second electronic component with a smaller protrusion amount than the first electronic component and the circuit board 50.

The distance between the region of the circuit board 50 where the switching element Sup is mounted and the bearing holder 40 is the sum of the protrusion amount Δ1 and the thickness of the thermal grease 90. The thickness of the thermal grease 90 is the length of the thermal grease 90 in the z-axis direction. The distance between the region of the circuit board 50 where the shunt resistor 80 is mounted and the bearing holder 40 is the sum of the protrusion amount Δ2 and the thickness of the thermal grease 90. The distance between the region of the circuit board 50 where the capacitor 70 is mounted and the bearing holder 40 is equal to the thickness of the thermal grease 90.

The portions of the bearing holder 40 that face the power electronic components form a heat absorption portion Pah.
The thermal grease 90 is not provided on the portion where the microcomputer 78 protrudes from the circuit board 50 toward the bearing holder 40. Therefore, there is clearance between the microcomputer 78 and the bearing holder 40. The microcomputers 78 are mounted closer to the bolts 60 than the power components. As shown in FIG. 2, not only the microcomputers 78 but also the power supply circuits 76 and the pre-drivers 74 are mounted closer to the bolts 60 than the power components. The microcomputers 78, the power supply circuits 76, the pre-drivers 74, etc. are control electronic components. The control electronic components consume less power than the power electronic components.

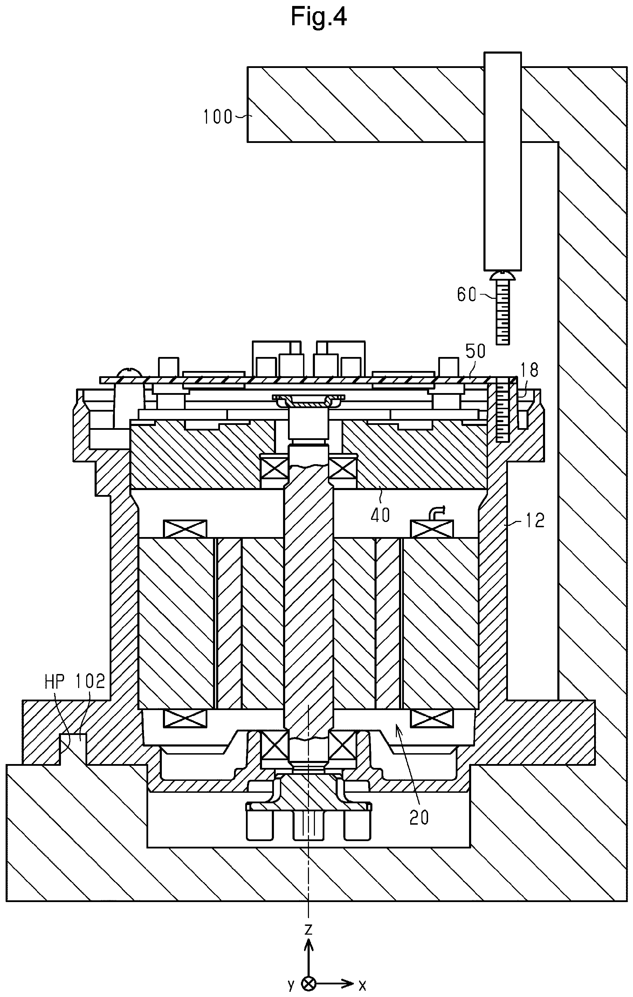

FIG. 4 shows a process of fixing the circuit board 50 to the motor housing 12.
As shown in FIG. 4, a positioning protrusion 102 of an automatic fastening machine 100 is fitted into a positioning hole Hp of the motor housing 12. The positioning protrusion 102 is a protrusion for positioning the motor housing 12 when the bolts 60 are tightened. The automatic fastening machine 100 then passes the bolts 60 through the circuit board 50 and tightens them into the supports 18.

### <Functions and Effects of Embodiment>

The supports 18 are provided near the edge of the opening of the motor housing 12. The circuit board 50 is screwed to the supports 18 without via the bearing holder 40. This allows the automatic fastening machine 100 to perform the screwing more satisfactorily compared to the case where it screws the circuit board 50 to the bearing holder 40.

That is, the automatic fastening machine 100 performs the screwing operation with the motor housing 12 positioned by the positioning protrusion 102. The bearing holder 40 is a separate member from the motor housing 12. Therefore, if the circuit board 50 is to be screwed to the bearing holder 40, the relative positional relationship between threaded holes in the bearing holder 40 and the automatic fastening machine 100 becomes an issue. However, a mounting deviation occurs when the bearing holder 40 is mounted in the motor housing 12. Therefore, the positions of the threaded holes in the bearing holder 40 may deviate from the positions expected by the automatic fastening machine 100.

In the embodiment, on the other hand, the bolts 60 are tightened into the threaded holes in the motor housing 12. Therefore, the threaded holes can be accurately located at the positions expected by the automatic fastening machine 100.
The above embodiment further has the following functions and effects.
(1) The circuit board 50 is in contact with the supports 18. This allows heat from the circuit board 50 to flow directly into the motor housing 12.
(2) The supports 18 are provided adjacent to the side wall 16 of the motor housing 12. The base of each support 18 is connected to a portion of the side wall 16 that faces the support 18. This facilitates heat that has flowed from the circuit board 50 into the supports 18 to flow into the side wall 16 of the motor housing 12. Therefore, the side wall 16 can be effectively used as a heat dissipation member.
(3) The supports 18 and the side wall 16 form a heat transfer path for the control electronic components such as the microcomputers 78. This can provide separate heat dissipation paths for the control electronic components and for the power electronic components.
(4) The control electronic components are disposed at positions closer to the supports 18 than the power electronic components. This facilitates dissipation of heat generated by the control electronic components to the supports 18 compared to the case where the control electronic components are disposed at positions farther from the supports 18 than the power electronic components.
(5) The distance between the heat absorption portion Pah and the circuit board 50 is set according to the amounts by which the power electronic components facing the heat absorption portion Pah protrude from the circuit board 50 toward the bearing holder 40. The distances between the power electronic components that are heat generating elements and the bearing holder 40 can thus be minimized. This facilitates heat dissipation from the power electronic components to the heat absorption portion Pah.
(6) The thermal grease 90 is provided between the power electronic components and the heat absorption portion Pah. This facilitates heat dissipation from the power electronic components to the heat absorption portion Pah.
(7) No heat dissipation grease is provided in the regions of the bearing holder 40 onto which the control electronic components are projected in the direction along the z-axis. Heat from the bearing holder 40 is therefore less likely to flow into the control electronic components.
(8) The supports 18 are located radially outward of the bearing holder 40. This simplifies the shape of the bearing holder 40 compared to the case where the supports 18 are inserted into holes extending through the bearing holder 40.
(9) The inverter of the first system stator and the inverter of the second system are arranged symmetrically with respect to the plane S. This allows heat generated in each of the inverter of the first system and the inverter of the second system to be dissipated more efficiently compared to the case where the inverter of the first system and the inverter of the second system are unevenly distributed in one of the two regions divided by the plane S.

### <Other Embodiments>

The embodiment can be modified as follows. The embodiment and the following modifications can be combined as long as no technical contradictions arise.

### "Regarding Circuit Board Fixing Portion"

- The arrangement of the supports 18 is not limited to that illustrated in FIG. 2.
- The number of supports 18 is not limited to 10. For example, any number of supports 18 equal to or more than two may be provided. In this case, the number of supports 18 does not have to be even.
   - The supports 18 do not have to be disposed so as to face the side wall 16 of the motor housing 12. For example, there may be a support located in the center of the circuit board 50.
- The circuit board fixing portion is not limited to the supports 18. For example, the circuit board fixing portion may be part of the side wall 16. Specifically, for example, the side wall of the motor housing 12 may be expanded radially inward, and threaded holes for inserting the bolts 60 may be provided in the expanded side wall.

### "Regarding Difference in Position between Heat Absorption Portion Pah and Circuit Board Fixing Portion in Direction along Z-Axis"

- In the above embodiment, the difference between the position of a portion of the heat absorption portion Pah that faces an electronic component and the position of the distal end face (circuit board support surface) of the support 18 in the direction along the z-axis is the sum of the protrusion amount of the electronic component and the thickness of the thermal grease 90. However, the present disclosure is not limited to this. For example, the difference between the position of a portion of the heat absorption portion Pah that faces an electronic component and the position of the distal end face of the support 18 in the direction along the z-axis may be larger than the sum of the protrusion amount of the electronic component and the thickness of the thermal grease 90. In other words, there may be clearance between the thermal grease 90 and the circuit board 50.
   - In the above embodiment, the z-axis coordinate component of the control-side surface of the bearing holder 40 is greater in a second portion facing the second electronic component with a small protrusion amount than in a first portion facing the first electronic component with a large protrusion amount. However, the present disclosure is not limited to this. For example, the z-axis coordinate component may be the same in the first and second portions.

### "Regarding Heat Dissipation Member"

- The heat dissipation member is not limited to the thermal grease 90. For example, the heat dissipation member may be a thermal sheet or thermal rubber.

### "Regarding Motor"

- The motor does not have to be an SPMSM. The motor may be, for example, an interior permanent magnet synchronous motor, a wound field synchronous motor, or a direct current motor. Alternatively, the motor may be, for example, an induction machine.
   - In the above embodiment, the stator 22 has redundancy with the stator coils of two systems provided in the stator 22. However, the present disclosure is not limited to this. For example, the stator 22 may have redundancy with stator coils of three or more systems provided in the stator 22.
   - The stator 22 does not have to have redundancy. For example, the stator 22 of the motor may include a stator coil of one system.

### "Regarding Layout for Stator Coil Redundancy"

- In the above embodiment, the electronic components of the systems are arranged symmetrically according to the redundancy of the stator 22. However, the present disclosure is not limited to this. For example, only part of the components of the systems, such as the inverters of the systems, may be arranged symmetrically.

## Claims

1. A motor device comprising:
a motor;
a motor housing;
a bearing holder; and
a circuit board, wherein:
a stator of the motor is housed in a space defined by the motor housing and the bearing holder;
the bearing holder supports a rotary shaft of the motor;
the bearing holder includes a first surface and a second surface that face opposite directions in an axial direction of the rotary shaft, the first surface facing the stator;
the circuit board is disposed so as to face the second surface;
a plurality of electronic components is mounted on the circuit board; and
the motor housing includes a circuit board fixing portion having a hole through which the circuit board is fixed.

2. The motor device according to claim 1, wherein:
the circuit board fixing portion is a support provided inward of a side wall of the motor housing; and
a base portion of the support is connected to a portion of the side wall that faces the support.

3. The motor device according to claim 1, wherein:
the bearing holder includes a heat absorption portion configured to absorb heat from one or more predetermined electronic components out of the plurality of electronic components; and
a difference between a position of the heat absorption portion and a position of the circuit board fixing portion in the axial direction is equal to or greater than a length by which the predetermined electronic component protrudes from the circuit board toward the bearing holder in the axial direction.

4. The motor device according to claim 3, wherein:
the predetermined electronic components include a first electronic component and a second electronic component;
the heat absorption portion includes a first portion facing the first electronic component and a second portion facing the second electronic component;
a length by which the first electronic component protrudes from the circuit board in the axial direction is greater than a length by which the second electronic component protrudes from the circuit board in the axial direction; and
a distance between the first portion and the circuit board is greater than a distance between the second portion and the circuit board.

5. The motor device according to claim 3, wherein a heat dissipation member is provided between the heat absorption portion and the predetermined electronic component.

6. The motor device according to claim 5, wherein:
the predetermined electronic component is a power electronic component;
the plurality of electronic components includes a control electronic component that consumes less power than the power electronic component; and
a space is provided between the control electronic component and the bearing holder, and the heat dissipation member is not provided in the space.

7. The motor device according to claim 6, wherein the control electronic component is disposed at a position closer to the circuit board fixing portion than the power electronic component.

8. The motor device according to claim 1, wherein the circuit board fixing portion is provided outward of the bearing holder in a radial direction of the motor.

9. The motor device according to claim 1, wherein:
the motor includes a first-system current flow path and a second-system current flow path that are independent of each other;
the plurality of electronic components includes a first-system switching element and a second-system switching element;
the first-system switching element is configured to control a current in the first-system current flow path;
the second-system switching element is configured to control a current in the second-system current flow path;
the first-system switching element is provided in a first region of the circuit board;
the second-system switching element is provided in a second region of the circuit board;
the first region and the second region are two regions into which the circuit board is divided by the predetermined plane; and
the predetermined plane is a plane that passes through the rotary shaft of the motor and that is parallel to the axial direction.
